# EUROPÄISCHE PATENTSCHRIFT

(11) **EP 2 700 293 B1**
(45) Veröffentlichungstag und Bekanntmachung des Hinweises auf die Patenterteilung: **10.05.2017**
(21) Anmeldenummer: 13168826.9
(22) Anmeldetag: 23.05.2013
(51) Int. Cl.: A01D 34/30

(54) **Getriebe für den Antrieb eines Mähmessers einer Erntemaschine**
Transmission for driving a mower blade of a harvesting machine
Engrenage pour l'entraînement d'une lame de coupe d'une moissonneuse

(30) Priorität: 21.08.2012 DE 102012107681
(43) Veröffentlichungstag der Anmeldung: 26.02.2014
(73) Patentinhaber: CLAAS Selbstfahrende Erntemaschinen GmbH, 33428 Harsewinkel (DE)
(72) Erfinder: Flöthmann, Sebastian, 33334 Gütersloh (DE); Bürmann, Dominik, 33415 Verl (DE)

(56) Entgegenhaltungen:
- EP-A1- 1 772 051
- EP-A1- 2 179 638
- EP-A2- 2 364 584
- DE-A1- 3 512 619
- DE-A1- 3 931 736

## Beschreibung

Die Erfindung betrifft ein Getriebe für den Antrieb eines Mähwerks einer Erntemaschine mit einer in einem Getriebegehäuse angeordneten Hauptwelle, an welcher abtriebsseitig ein über einen Umlaufrädertrieb angetriebener Kurbelzapfen exzentrisch geführt ist, wobei der Kurbelzapfen zumindest mittelbar mit einem oszillierend bewegten Mähmesser verbindbar ist.

Ein entsprechendes Getriebe für den Antrieb eines Mähwerks ist vorgesehen, um eine rotative Antriebsbewegung in eine Kurbelbewegung umzusetzen, die zur Erzeugung einer oszillierenden Bewegung des Mähmessers dient. Das Mähmesser besteht in der Regel aus einem Messerbalken mit daran befestigten Messerklingen, wobei der Messerbalken in Fingern des Mähwerks geführt ist. Die Finger bilden dabei aufgrund ihres Zusammenwirkens mit den einzelnen Messerklingen Gegenschneiden, so dass das zu erntende Halmgut von den Messerklingen und den Fingern abgetrennt wird. Es sind allerdings auch Mähwerke bekannt, bei denen zwei Mähmesser gegenläufig zueinander bewegt werden, wobei die auf den beiden Messerbalken angeordneten Messerklingen entsprechende Schneiden und Gegenschneiden bilden.

Ein Getriebe für den Antrieb eines Mähmessers einer Erntemaschine der im Oberbegriff des Patentanspruchs 1 genannten Gattung ist aus der DE 44 06 959 A1 bekannt. Dabei ist innerhalb eines Gehäuses eine als Rotor bezeichnete Hauptwelle angeordnet, die im Gehäuse über Wälzlager gelagert ist und an der ein Kurbelzapfen drehbar geführt ist. Dieser Kurbelzapfen weist eine Außenverzahnung auf, über welche der Kurbelzapfen mit der Funktion eines Planetenrades in ein im Getriebegehäuse angeordnetes Hohlrad eingreift. Eine am Ende des Kurbelzapfens vorgesehene Ringnut soll zur Aufnahme einer Fettfüllung dienen, mit welcher die Möglichkeit einer Dauerschmierung der innerhalb des Gehäuses angeordneten Wälzlager und des Zahneingriffs des Umlaufrädergetriebes gewährleistet werden soll.

Ein Schneidwerk für eine selbstfahrende Erntemaschine der im Oberbegriff des Patentanspruchs 1 angegebenen Gattung ist aus der EP 2 364 584 A2 bekannt. Die Getriebebaugruppe, die zum einen über einen Kegeltrieb und eine diesem nachgeordnete Gelenkwelle das Messergetriebe und über einen weiteren Kegeltrieb einen innerhalb einer Schneidwerksmulde des Schneidwerks angeordneten Querförderer antreibt, wird von einer Antriebswelle eines Schrägförderers aus über ein Element angetrieben, das ein Drehspiel zulässt. Dieses ein Drehspiel zulassende Element soll dabei vorzugsweise zwischen in Umfangsrichtung wirkenden Anschlägen ein Elastomer aufnehmen. Es ist das Ziel, dadurch die Amplitude der Schwingung des Antriebsstranges zu begrenzen.

Die Druckschrift DE 39 31 736 A1 offenbart ein Antriebsgetriebe für Mähmesser von Erntemaschinen, dessen Rotor und Schwungscheibe beziehungsweise Schwungmasse von einem Hydraulikmotor in Drehbewegung versetzt wird. Die Schwungmasse ist topfförmig ausgebildet.

Es ist Aufgabe der vorliegenden Erfindung, Mittel am Antriebstrang des Mähmesserantriebes der Erntemaschine vorzusehen, die der durch den Kurbeltrieb und die Masse des Mähmessers erzeugten Drehungleichförmigkeit entgegenwirken, so dass die entstehenden Drehschwingungen reduziert werden. Weiterhin sollen sich trotz der Anordnung dieser Mittel baulich günstige Abmessungen ergeben.

Dafür ist ein Getriebe vorgesehen, bei dem die Hauptwelle an ihrem vom Kurbelzapfen abgewandten Ende, an welchem sie angetrieben wird, mit einer Schwungmasse verbunden ist. Diese am Antrieb der Hauptwelle angeordnete Schwungmasse sorgt durch ihre Massenträgheit für eine Reduzierung der aufgrund der Drehungleichförmigkeit des Kurbeltriebs auf den Antriebsstrang übertragenen Kräfte. Durch die Anordnung der Schwungmasse am antriebsseitigen Ende der Hauptwelle, dem Getriebegehäuse unmittelbar benachbart, ergibt sich eine im Hinblick auf den beanspruchten Bauraum günstige Anordnung.

Demgegenüber weist das Getriebe für den Antrieb eines Mähmessers nach der DE 44 06 959 A1 keine Schwungmasse auf und der Antrieb des Getriebes erfolgt offenbar über einen als Riemenscheibe ausgebildeten Abschnitt der Hauptwelle. Es sind folglich keine Mittel zur Reduzierung der aufgrund der Drehungleichförmigkeit auftretenden Kräfte vorgesehen.

Die Schwungmasse ist topfförmig ausgebildet. Ein Boden dieser topfförmig gestalteten Schwungmasse ist dabei mit der Hauptwelle verbunden und somit flanschartig ausgebildet. An diesen Boden schließt sich ein hohlzylindrischer Teil an, der dickwandig ausgebildet ist und somit zur Erzeugung der entsprechenden Massenkräfte dient. An diesen hohlzylindrischen Teil der Schwungmasse oder an den flanschartigen Boden sollen Antriebselemente angreifen, die zum Antrieb des Getriebes dienen.

Das Getriebe zeichnet sich dadurch aus, dass am Boden eine Gelenkwelle mittels ihres Gelenks angreift. Somit ist das Gelenk derart in die Schwungmasse hineinverlegt, dass insgesamt die Länge von Profilrohren der Gelenkwelle verlängert werden kann und sich damit ein größerer Verschiebeweg ergibt.

Weiterhin ist vorgesehen, dass ein Schneidwerk der Erntemaschine eine Schneidwerksmulde sowie einen gegenüber dieser verschiebbaren, das Mähmesser und das Getriebe aufnehmenden Schneidtisch aufweist, dass an der Schneidwerksmulde eine Getriebegruppe angeordnet ist, deren Abtriebswelle über eine teleskopierbare Gelenkwelle mit der topfförmigen Schwungmasse verbunden ist, und dass ein am abtriebsseitigen Ende der Gelenkwelle vorgesehenes Gelenk im Wesentlichen innerhalb der axialen Erstreckung der Schwungmasse angeordnet ist. Ein derartiges verstellbares Schneidwerk kann sowohl zur Ernte von Getreide als auch zur Ernte von Raps verwendet werden, wobei bei der Rapsernte der Schneidtisch gegenüber der Schneidwerksmulde in Ernterichtung verschoben wird. Dadurch ergibt sich ein größerer Abstand zwischen dem Schneidtisch und einem in der Schneidwerksmulde angeordneten Querförderer, so dass die Voraussetzungen für die Ernte des im Bestand eine große Halmlänge und eine große Anzahl von Halmen aufweisenden Raps' verbessern lassen.

Zwischen der gegenüber den übrigen Antriebselementen des Schneidwerks ortsfest angeordneten Getriebegruppe und dem Getriebe nach der vorliegenden Erfindung soll die teleskopierbare Gelenkwelle angeordnet sein, die vorzugsweise mit dem Boden der Schwungmasse verbunden ist. Dadurch wird erreicht, dass das Getriebe gegenüber der Getriebegruppe verschoben werden kann, wenn die Lage des Schneidtisches verändert wird. Das Gelenk der Gelenkwelle, welches mit der Schwungmasse verbunden ist und um den erforderlichen Beugungswinkel schwenkt, soll innerhalb der Erstreckung des hohlzylindrischen Abschnitts der Schwungmasse liegen, wobei der hohlzylindrische Abschnitt der Schwungmasse mit einer axialen Abmessung gestaltet ist, die einen einer maximalen Verstellung des Schneidtisches entsprechenden Beugungswinkel zulässt. Daraus ergibt sich einerseits eine bezüglich des erforderlichen Bauraums günstige Anordnung und andererseits Verstellung des Schneidwerkes, die ohne den im Allgemeinen üblichen erforderlichen Arbeitsaufwand erfolgen kann.

Außerdem soll die Gelenkwelle einen für die Verstellung des Schneidtisches in seine Endpositionen erforderlichen Verschiebeweg aufweisen. Die Gelenkwelle weist üblicherweise zwei ineinander verschiebbare Profilrohre auf, die an ihren jeweiligen Enden mit Kreuzgelenken versehen ist. Diese Profilrohre müssen eine Länge aufweisen, aufgrund welcher eine maximale Verstellung des Schneidtisches gegenüber der Schneidwerksmulde realisiert werden kann. Andererseits ist der Weg, um den die Profilrohre ineinander geschoben werden können, durch die an den Enden der Profilrohre angebrachten Kreuzgelenke begrenzt. Es ist folglich das Ziel, welches mit der erfindungsgemäßen Anordnung realisiert werden kann, diesen Verschiebeweg insgesamt zu verlängern, indem das entsprechende dem im Getriebe benachbarte Kreuzgelenk innerhalb der Schwungmasse angeordnet wird, so dass sich insgesamt die Länge der Profilrohre zur Vergrößerung des Verschiebeweges verlängern lassen. Schließlich ist vorgesehen, torsionselastische Elemente einzusetzen, die zwischen der Abtriebswelle und der Schwungmasse angeordnet sind. Diese torsionselastischen Elemente können als Federdämpferelemente ausgebildet sein, die innerhalb der Gelenkwelle oder zwischen dem Gelenk und dem Boden der topfförmigen Schwungmasse angeordnet sind.

Die Erfindung ist nicht auf die angegebene Kombination der Merkmale des Patentanspruchs 1 und der abhängigen Patentansprüche beschränkt. Es ergeben sich darüber hinaus Möglichkeiten, einzelne Merkmale der Patentansprüche mit Vorteilsangaben in der Beschreibung, mit Merkmalen, die sich aus der Erläuterung der Zeichnungen ergeben, und mit zeichnerisch offenbarten Einzelheiten zu kombinieren. Durch die Bezugnahme der Patentansprüche auf die Zeichnungen unter Verwendung von Bezugszeichen soll der Schutzumfang nicht auf derartige konkret dargestellte Elemente und deren Kombination beschränkt sein.

Zur weiteren Erläuterung der Erfindung wird auf die Zeichnung verwiesen, in der ein Ausführungsbeispiel der Erfindung vereinfacht dargestellt ist.

Es zeigen:
- Figur 1: eine schematische Ansicht eines Schneidwerks einer Erntemaschine in Draufsicht, bei der ein Schneidtisch gegenüber einer Schneidwerksmulde verstellbar ist;
- Figur 2: einen Teil einer Seitenansicht eines Schneidwerks mit unterschiedlichen Lagen des Getriebes gegenüber der Getriebegruppe; und
- Figur 3: einen Längsschnitt durch ein Getriebe, an welchem eine erfindungsgemäße Schwungmasse vorgesehen ist.

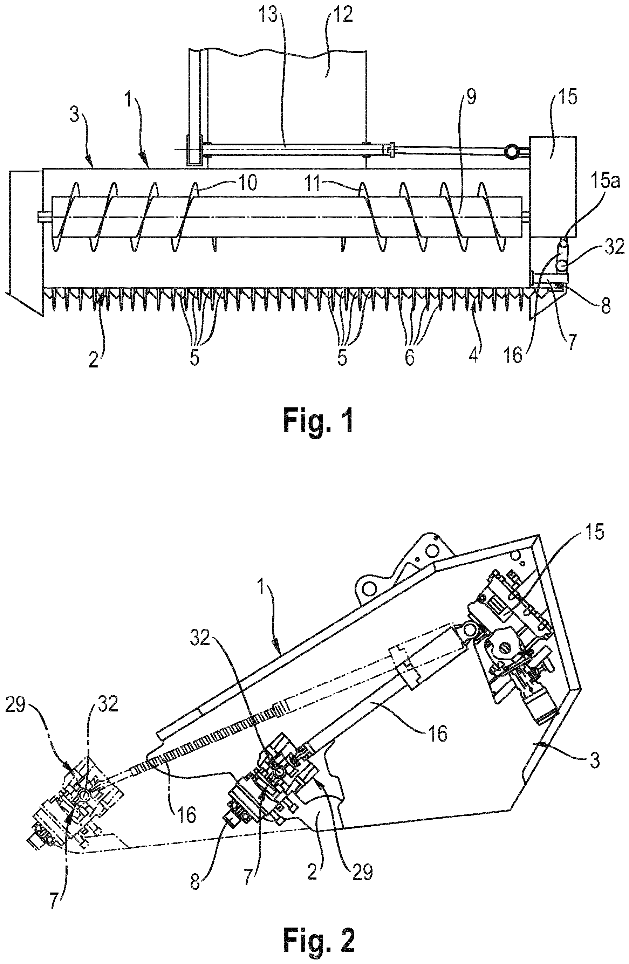

In der Figur 1 ist mit 1 ein Schneidwerk dargestellt, das aus einem Schneidtisch 2 und einer Schneidwerksmulde 3 besteht. Wie aus der Darstellung hervorgeht, ist der Schneidtisch 2 baulich von der Schneidwerksmulde 3 getrennt, so dass er sich gegenüber dieser in Richtung des Erntevorganges oder in entgegengesetzte Richtung verstellen lässt. Der Schneidtisch 2 nimmt ein Mähmesser 4 auf, das aus einem nicht näher dargestellten Messerbalken und einer Vielzahl darauf befestigter Messerklingen 5 besteht. Dabei ist das Mähmesser 4 in Fingern 6 geführt, welche am Schneidtisch 2 befestigt sind.

Weiterhin ist am Ende des Mähmessers 4 ein Getriebe 7 angeordnet, wobei dieses Getriebe 7 das Mähmesser 4 mit Hilfe eines Kurbelzapfens 8 antreibt. Die Schneidwerksmulde nimmt einen Querförderer 9 auf, der mit gegenläufigen Schneckengängen 10 und 11 versehen ist, so dass das vom Mähmesser 4 im Zusammenwirken mit den Fingern 6 geschnittene Erntegut mittig der Schneidwerksmulde 3 zusammengeführt wird. Von dort aus wird das Erntegut an einen Schrägförderer 12 übergeben, der dieses anschließend einer nicht dargestellten Aufbereitungseinrichtung, wie beispielsweise einer Dresch- und Trenneinrichtung eines Mähdreschers zuführt.

Das gesamte Schneidwerk 1 ist vorzugsweise durch eine Kuppeleinrichtung mit dem Schrägförderer 12 verbindbar, wobei der Antrieb des Schneidwerks 1 von einer im Schrägförderer 12 angeordneten Welle 13 aus über eine Kardanwelle 14 auf eine Getriebegruppe 15 erfolgt. Diese Getriebegruppe 15 treibt zum einen das Getriebe 7 und zum anderen den Querförderer 9 sowie eine nicht näher dargestellte Haspel an. Zum Antrieb des Getriebes 7 geht, wie der Figur 1 entnommen werden kann, von der Getriebegruppe 15 eine Abtriebswelle 15a aus, die die mit einer Gelenkwelle 16 verbunden ist, wobei diese Gelenkwelle 16 mit ihrem anderen Ende trieblich mit dem Getriebe 7 verbunden ist.

Ein entsprechend der schematischen Darstellung nach Figur 1 ausgebildetes Schneidwerk 1 ist teilweise in der Figur 2 dargestellt. Durch gestrichelte Linien wird dabei eine Stellung des Schneidtisches 2 gezeigt, in der dieser gegenüber der Schneidwerksmulde 3 in Längsrichtung verstellt ist. Aus der Figur 2 geht hervor, dass die Gelenkwelle 16 in dieser Position des Schneidtisches 2 in ihre maximale Längserstreckung verstellt ist. Dagegen ist sie in der eingeschobenen Position des Schneidtisches 2 in ihre minimale Längserstreckung verstellt.

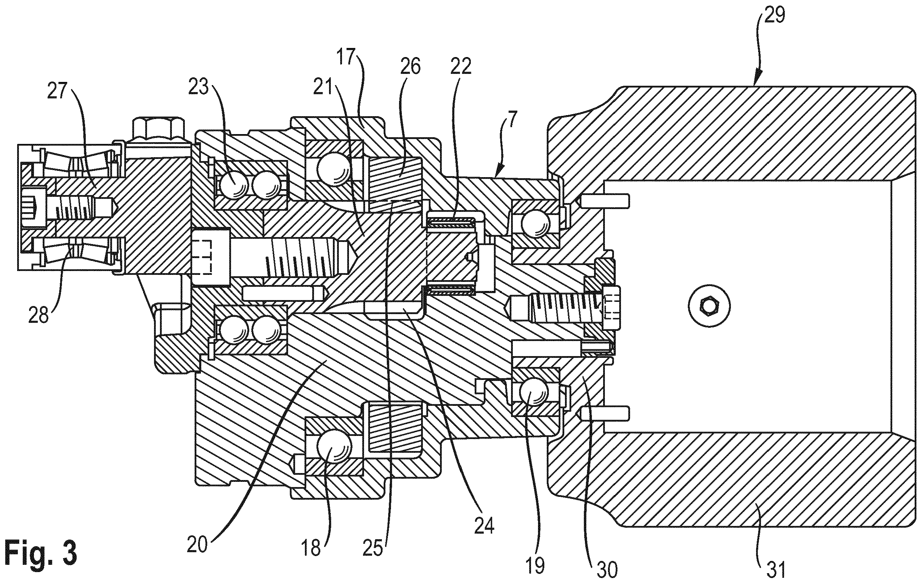

Einzelheiten zur Ausbildung des Getriebes 7 sind der nachfolgend erläuterten Figur 3 zu entnehmen. Das Getriebe 7 weist ein Getriebegehäuse 17 auf, in welchem über Wälzlager 18 und 19 eine Hauptwelle 20 gelagert ist. Diese Hauptwelle 20 nimmt einen Kurbelzapfen 21 auf, der an seinem einen Ende über ein Nadellager 22 und im Bereich seines anderen Endes über ein doppelreihiges Kugellager 23 in der Hauptwelle 20 gelagert ist. Der Kurbelzapfen 21 weist ferner in einem Bereich seines Umfangs eine Außenverzahnung 24 auf, über welche ein Eingriff in eine Innenverzahnung 25 eines Hohlrades 26 erfolgt. Dieses Hohlrad 26 wird durch einen ortsfest im Getriebegehäuse 16 angeordneten Ring gebildet. An dem Kurbelzapfen 21 ist ein Messerantriebszapfen 27 befestigt, der mit einem doppelreihigen Kegelrollenlager 28 versehen ist. Im Bereich dieser Lagerung 28 wird die Kurbelbewegung mittels weiterer nicht näher dargestellter Elemente auf das Mähmesser 4 übertragen.

Wie weiterhin aus der Figur 3 hervorgeht, ist an dem vom Kurbelzapfen 21 angewandten Ende der Hauptwelle 20 an dieser eine Schwungmasse 29 befestigt, die topfförmig ausgebildet ist und somit aus einem flanschartigen Boden 30 und einem hohlzylindrischen Abschnitt 31 besteht. An diesem flanschartigen Boden 30 soll die in Figur 1 dargestellte Gelenkwelle 16 mittels ihres Gelenks 32 angreifen. Somit ist das Gelenk 32 derart in die Schwungmasse 29 hineinverlegt, dass insgesamt die Länge von Profilrohren der Gelenkwelle verlängert werden kann und sich damit ein größerer Verschiebeweg ergibt. Somit reicht dieser Verschiebeweg aus, um eine Verlagerung des Schneidtisches 2 gegenüber der Schneidwerksmulde 3 in jede der unterschiedlichen Positionen zu ermöglichen.

**Bezugszeichenliste**

| | | | |
|---|---|---|---|
| 1 | Schneidwerk | 29 | Schwungmasse |
| 2 | Schneidtisch | 30 | Boden von 7 |
| 3 | Schneidwerksmulde | 31 | hohlzylindrischer Abschnitt |
| 4 | Mähmesser | 32 | Gelenk |
| 5 | Messerklingen | | |
| 6 | Finger | | |
| 7 | Getriebe | | |
| 8 | Kurbelzapfen | | |
| 9 | Querförderer | | |
| 10 | Schneckengang von 9 | | |
| 11 | Schneckengang von 9 | | |
| 12 | Schrägförderer | | |
| 13 | Welle | | |
| 14 | Kardanwelle | | |
| 15 | Getriebegruppe | | |
| 15a | Abtriebswelle | | |
| 16 | Gelenkwelle | | |
| 17 | Getriebegehäuse | | |
| 18 | Wälzlager | | |
| 19 | Wälzlager | | |
| 20 | Hauptwelle | | |
| 21 | Kurbelzapfen | | |
| 22 | Nadellager | | |
| 23 | doppelreihiges Kugellager | | |
| 24 | Außenverzahnung von 20 | | |
| 25 | Innenverzahnung | | |
| 26 | Hohlrad | | |
| 27 | Messerantriebszapfen | | |
| 28 | doppelreihiges Kegelrollenlager | | |

## Patentansprüche

1. Getriebe (7) für den Antrieb eines Mähwerkes einer Erntemaschine mit einer in einem Getriebegehäuse (17) angeordneten Hauptwelle (20), an welcher abtriebsseitig ein über einen Umlaufrädertrieb angetriebener Kurbelzapfen (8) exzentrisch geführt ist, wobei der Kurbelzapfen (8) zumindest mittelbar mit einem oszillierend bewegten Mähmesser verbindbar ist, wobei die Hauptwelle (20) an ihrem vom Kurbelzapfen (8) abgewandten Ende, an welchem sie angetrieben wird, mit einem flanschartig ausgebildeten Boden (30) einer Schwungmasse (29) verbunden ist, wobei die Schwungmasse (29) im Wesentlichen topfförmig ausgebildet ist,
**dadurch gekennzeichnet, dass**
am Boden (30) eine Gelenkwelle (16) mittels ihres Gelenks (32) angreift.

2. Getriebe nach Anspruch 1, **dadurch gekennzeichnet, dass** die topfförmige Schwungmasse (29) zum Verbinden über eine teleskopierbare Gelenkwelle (16) mit einer Abtriebswelle (15a) einer an einer Schneidwerksmulde (3) eines Schneidwerks der Erntemaschine, das einen gegenüber der Schneidwerksmulde (3) verschiebbaren, ein Mähmesser und das Getriebe (7) aufnehmenden Schneidtisch (2) aufweist, angeordneten Getriebegruppe (15) vorgesehen ist, , und dass ein am abtriebsseitigen Ende der Gelenkwelle (16) vorgesehenes Gelenk (32) im Wesentlichen innerhalb der axialen Erstreckung der Schwungmasse (29) angeordnet ist.

3. Getriebe nach Anspruch 2, **dadurch gekennzeichnet dass** die Schwungmasse (29) aus dem flanschartigen Boden (30) und einem hohlzylindrischen Abschnitt (31) besteht.

4. Getriebe nach einem der Ansprüche 2 - 3, **dadurch gekennzeichnet, dass** die Schwungmasse (29) über torsionselastische Elemente mit der Abtriebswelle (15a) verbindbar ist.

5. Getriebe nach einem der Ansprüche 2 - 4, **dadurch gekennzeichnet, dass** das Gelenk (32) derart in die Schwungmasse (29) hinein verlegt ist, dass insgesamt eine Länge von Profilrohren der Gelenkwelle (16) verlängerbar ist und sich damit ein größerer Verschiebeweg ergibt.

## Claims

1. A transmission (7) for the drive of a mowing mechanism of a harvester comprising a main shaft (20) which is arranged in a transmission housing (17) and at which at the drive output side a crank pin (8) driven by way of an epicyclic gear arrangement is eccentrically guided, wherein the crank pin (8) can be at least indirectly connected to an oscillatingly moved mowing blade, wherein at its end which is remote from the crank pin (8) and at which it is driven the main shaft (20) is connected to a flange-like end (30) of a flywheel mass (29), wherein the flywheel mass (29) is substantially cup-shaped,
**characterised in that**
a cardan shaft (16) engages the end (30) by means of its joint (32).

2. A transmission according to claim 1 **characterised in that** the cup-shaped flywheel mass (29) is provided for connection by way of a telescopic cardan shaft (16) to a drive output shaft (15a) of a transmission group (15) arranged at a cutting mechanism tray (3) of a cutting mechanism of the harvester, that has a cutting table (2) displaceable with respect to the cutting mechanism tray (3) and accommodating a mowing blade and the transmission (7), and that a joint (32) provided at the drive output end of the cardan shaft (16) is arranged substantially within the axial extent of the flywheel mass (29).

3. A transmission according to claim 3 **characterised in that** the flywheel mass (29) comprises the flange-like end (30) and a hollow-cylindrical portion (31).

4. A transmission according to one of claims 2 and 3 **characterised in that** the flywheel mass (29) can be connected to the drive output shaft (15a) by way of torsionally elastic elements.

5. A transmission according to one of claims 2 to 4 **characterised in that** the joint (32) is displaced into the flywheel mass (29) in such a way that overall a length of shaped tubes of the cardan shaft (16) can be increased and thus a greater displacement travel is afforded.

## Revendications

1. Transmission (7) pour l'entraînement d'un mécanisme de coupe d'une machine de récolte, comprenant un arbre primaire (20) qui est disposé dans un carter de transmission (17) et sur lequel est guidé de façon excentrique, côté mené, un maneton (8) entraîné par l'intermédiaire d'un engrenage planétaire, le maneton (8) pouvant être relié au moins indirectement à une lame de coupe déplacée de manière oscillante, l'arbre primaire (20) étant relié, à son extrémité qui est orientée à l'opposé du maneton (8) et par laquelle il est entraîné, à un fond en forme de flasque (30) d'une masse d'inertie (29), la masse d'inertie (29) étant conformée sensiblement en pot, **caractérisée en ce qu'**un arbre articulé (32) agit sur le fond (30) au moyen de son articulation (16).

2. Transmission selon la revendication 1, **caractérisée en ce que** la masse d'inertie en forme de pot (29) est prévue pour être reliée par l'intermédiaire d'un arbre articulé télescopique (16) à un arbre de sortie (15a) d'un groupe de transmission (15) disposé sur un bac de tablier de coupe (3) d'un tablier de coupe de la machine de récolte, ledit tablier de coupe comportant une table de coupe (2) qui peut coulisser par rapport au bac de tablier de coupe (3) et qui reçoit une lame de coupe et la transmission (7), et **en ce qu'**une articulation (32) prévue à l'extrémité côté mené de l'arbre articulé (16) est disposée sensiblement à l'intérieur de l'extension axiale de la masse d'inertie (29).

3. Transmission selon la revendication 2, **caractérisée en ce que** la masse d'inertie (29) est constituée du fond en forme de flasque (30) et d'une portion cylindrique creuse (31).

4. Transmission selon une des revendications 2 et 3, **caractérisée en ce que** la masse d'inertie (29) peut être reliée à l'arbre mené (15a) par l'intermédiaire d'éléments à élasticité torsionnelle.

5. Transmission selon une des revendications 2 à 4, **caractérisée en ce que** l'articulation (32) est encastrée à l'intérieur de la masse d'inertie (29) de façon qu'une longueur de tubes profilés de l'arbre articulé (16) soit prolongeable et qu'une course de coulissement supérieure puisse ainsi être obtenue.
